# EUROPEAN PATENT APPLICATION

(11) **EP 4 761 455 A1**
(43) Date of publication of application: **17.06.2026**
(21) Application number: 25756812.1
(22) Date of filing: 23.07.2025
(51) Int. Cl.: H04W 76/20, H04W 76/15, H04W 72/0453, H04B 17/345, H04W 24/08, H04W 76/30, H04W 84/12

(54) **ELECTRONIC APPARATUS AND OPERATING METHOD THEREOF FOR DSO**

(30) Priority: 02.10.2024 KR 20240134161; 15.10.2024 KR 20240140241
(71) Applicant: SAMSUNG ELECTRONICS CO., LTD., Yeongtong-gu Suwon-si, Gyeonggi-do 16677 (KR)
(72) Inventor: CHOI, Junsu, Suwon-si, Gyeonggi-do 16677 (KR)
(74) Representative: Appleyard Lees IP LLP
(86) International application number: PCT/KR2025/010845
(87) International publication number: WO 2026/075341

(57) **Abstract**

An electronic device and an operating method thereof for dynamic subband operation (DSO) are provided. The operating method of the electronic device includes, after a first link is formed between the electronic device and an external electronic device broadcasting a wireless fidelity (Wi-Fi) signal, based on a presence of a second link between the electronic device and the external electronic device, transmitting data to the external electronic device by using a second profile. The first link is based on a first profile and the second link is based on the second profile.

## Description

### BACKGROUND

### 1. Field

The disclosure relates to an electronic device and an operating method thereof. In particular, the disclosure relates to a dynamic subband operation (DSO) method.

### 2. Description of Related Art

In wireless communication systems, data is transmitted via a frequency band, and efficient use of the frequency band is typically important. For example, frequency resource problems can occur due to interference of devices in the wireless communication system, and due to underutilization of part of the frequency band.

The above information is presented as related art only to assist with an understanding of the disclosure. No determination has been made, and no assertion is made, as to whether any of the above might be applicable as prior art with regard to the disclosure.

### SUMMARY

An electronic device according to an embodiment may include at least one processor including processing circuitry and memory storing instructions. When executed by the at least one processor individually or collectively, the instructions may cause the electronic device to, after a first link is formed between the electronic device and an external electronic device based on a first profile of the external electronic device broadcasting a wireless fidelity (Wi-Fi) signal, based on a presence of a second link between the electronic device and the external electronic device based on a second profile of the external electronic device, transmit data to the external electronic device by using the second profile. The first profile may be configured such that the external electronic device exchanges data with the electronic device using a frequency range of a first bandwidth. The second profile may be configured such that the external electronic device exchanges data with the electronic device using, among a primary channel and a secondary channel, the secondary channel in the frequency range.

An electronic device broadcasting a Wi-Fi signal according to an embodiment may include at least one processor including processing circuitry, and memory storing instructions. When executed by the at least one processor individually or collectively, the instructions may cause the electronic device to, after a first link is formed between the electronic device and an external electronic device based on a first profile of the external electronic device, based on a presence of a second link between the electronic device and the external electronic device based on a second profile of the electronic device, transmit data to the external electronic device by using the second profile. The first profile may be configured such that the external electronic device exchanges data with the electronic device using a frequency range of a first bandwidth. The second profile may be configured such that the electronic device exchanges data with the external electronic device using, among a primary channel and a secondary channel, the secondary channel in the frequency range.

An operating method of an electronic device according to an embodiment may include, after a first link is formed between the electronic device and an external electronic device based on a first profile of the external electronic device broadcasting a Wi-Fi signal, based on a presence of a second link between the electronic device and the external electronic device based on a second profile of the external electronic device, transmitting data to the external electronic device by using the second profile. The first profile may be configured such that the external electronic device exchanges data with the electronic device using a frequency range of a first bandwidth. The second profile may be configured such that the external electronic device exchanges data with the electronic device using, among a primary channel and a secondary channel, the secondary channel in the frequency range.

According to an embodiment, a non-transitory computer-readable storage medium storing one or more computer programs may include instructions for executing the operating method by a processor.

### BRIEF DESCRIPTION OF THE DRAWINGS

FIGS. 1 and 2 are diagrams illustrating a wireless local area network (WLAN) system;
FIG. 3 is a diagram illustrating an example of a link setup operation;
FIG. 4 is a diagram illustrating a frequency band and bandwidth used in a wireless communication system;
FIG. 5 is a diagram illustrating a primary channel and a secondary channel in a wireless communication system;
FIGS. 6 and 7 are diagrams illustrating a frequency resource underutilization issue;
FIG. 8 is a diagram illustrating an example of a communication environment in which a signal interference issue may occur due to constraints of a primary channel/secondary channel;
FIG. 9 is a diagram illustrating a protocol for dynamic subband operation (DSO);
FIG. 10 is a diagram illustrating a protocol for DSO when multiple links exist,;
FIG. 11 is a diagram illustrating a protocol for DSO when multiple links do not exist;
FIG. 12 is a flowchart illustrating operations of an access point (AP) for DSO;
FIG. 13 is a diagram illustrating a traffic identifier to link mapping (T2LM) element;
FIG. 14 is a diagram illustrating a basic service set transition management (BTM) request frame;
FIG. 15 is a flowchart illustrating operations of a client device for DSO;
FIG. 16 is a diagram illustrating profile-based media control;
FIG. 17 is a flowchart illustrating an operation of an electronic device; and
FIG. 18 is a block diagram of an electronic device in a network environment.

### DETAILED DESCRIPTION

Hereinafter, embodiments will be described in detail with reference to the accompanying drawings. When describing the embodiments with reference to the accompanying drawings, like reference numerals refer to like elements and a repeated description related thereto will be omitted. In the following description, features which are described with reference to examples in parentheses are to be interpreted as optionally including being comprised of or formed of or with one, some or all of such examples.

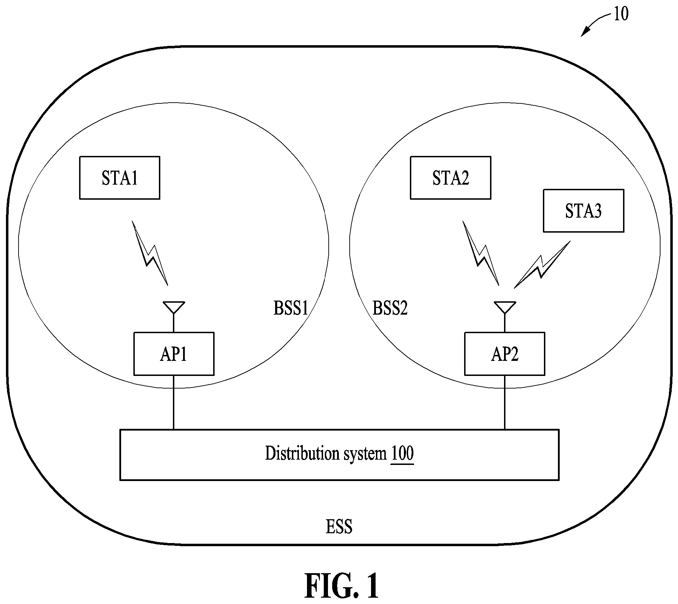

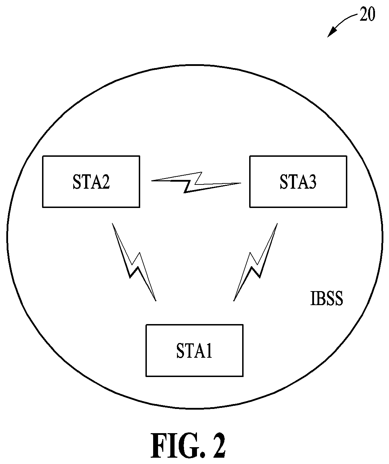

FIGS. 1 and 2 are diagrams illustrating a wireless local area network (WLAN) system.

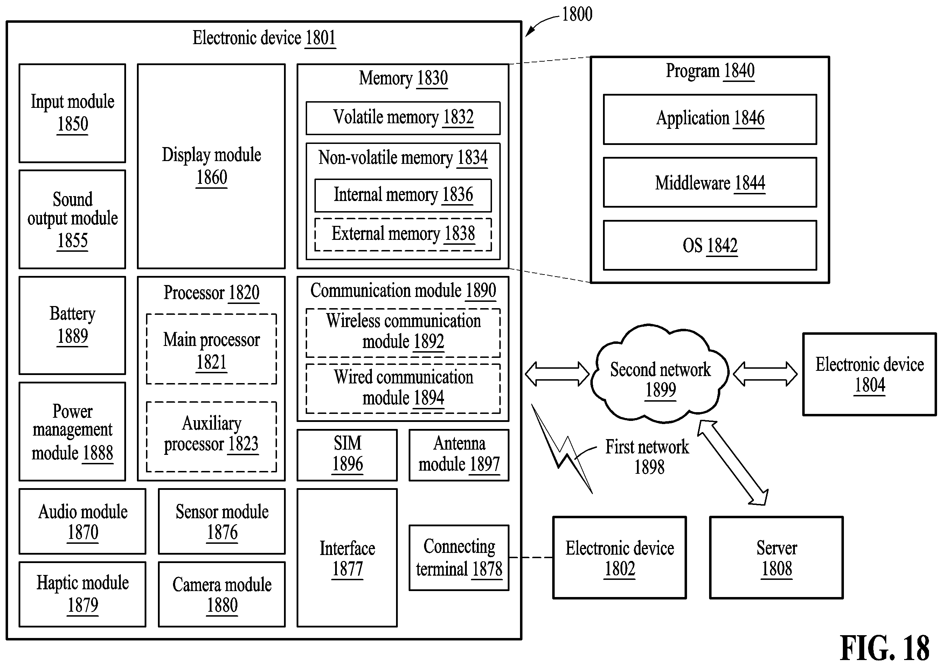

Referring to FIG. 1, according to an embodiment, a WLAN system 10 may be an infrastructure mode in which an access point (AP) is present in a structure of a WLAN. The WLAN system 10 may include one or more basic service sets (BSSs) (e.g., BSS1 and BSS2). The BSS (e.g., BSS1 or BSS2) may be a set of stations (STAs) (e.g., an electronic device 1801 of FIG. 18) and an access point (AP) (e.g., an electronic device 1802 or an electronic device 1804 of FIG. 18) that may communicate with each other with a successful synchronization. The BSS1 may include an AP1 and an STA1, and the BSS2 may include an AP2, an STA2, and an STA3.

According to an embodiment, the WLAN system 10 may include at least one STA (e.g., STA1 to STA3), a plurality of APs (e.g., AP1 and AP2) providing a distribution service, and a distribution system 100 connecting the plurality of APs (e.g., AP1 and AP2). The distribution system 100 may implement an extended service set (ESS), which is a service set extended by connecting a plurality of BSSs (e.g., BSS1 and BSS2). Herein, the term ESS may be used to refer to one network in which the plurality of APs (e.g., AP1 and AP2) are connected through the distribution system 100. The plurality of APs (e.g., AP1 and AP2) included in one ESS may have the same service set identification (SSID).

According to an embodiment, the STA (e.g., STA1 to STA3) may include a medium access control (MAC) and a physical layer interface for a wireless medium. The term "STA" (e.g., STA1 to STA3) may be used to refer to an AP. The term "STA" (e.g., STA1 to STA3) may be used to refer to a non-AP STA. The STA (e.g., STA1 to STA3) may also be referred to by various names, such as an electronic device, a mobile terminal, a wireless device, a wireless transmit/receive unit (WTRU), user equipment (UE), a mobile station (MS), or a mobile subscriber unit.

Referring to FIG. 2, according to an embodiment, a WLAN system 20 may represent an ad-hoc mode in which a network is established and communicated between a plurality of STAs (e.g., STA1 to STA3) without any AP in the structure of a WLAN, as opposed to the WLAN system 10 of FIG. 1. The WLAN system 20 may include a BSS operating in an ad-hoc mode, for example, an independent basic service set (IBSS).

According to an embodiment, the IBSS does not include any AP, and therefore, it may not include a centralized management entity that performs a central management function. In the IBSS, the STAs may be managed in a distributed manner. In the IBSS, all the STAs may be mobile STAs and may form a self-contained network (or an integrated network) because access to a distribution system is not present. In the IBSS, at least one of STA1, STA2 and STA3 may broadcast a Wi-Fi signal.

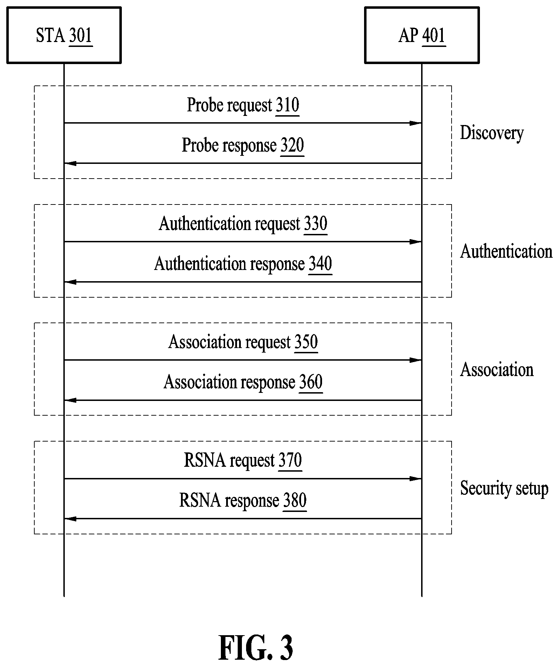

FIG. 3 is a diagram illustrating an example of a link setup operation.

Referring to FIG. 3, according to an embodiment, the link setup operation may be performed between devices (e.g., STA 301 and AP 401) to communicate with each other. For the link setup, operations for network discovery, execution of authentication, establishing association, and setting the security may be performed. The link setup operation may be referred to as a session initiation operation or a session setup operation.

According to an embodiment, the network discovery operation may include operation 310 and operation 320. In operation 310, the STA 301 (e.g., the electronic device 1801 of FIG. 18) may transmit a probe request frame to probe which AP (e.g., the electronic device 1802 or the electronic device 1804 of FIG. 18) exists and may wait for a response to the probe request frame. The STA 301 may find a network to join by performing a scanning operation to access the network. The probe request frame may include information of the STA 301 (e.g., device name and/or address of the STA 301). The scanning operation in operation 310 may refer to an active scanning operation. In operation 320, the AP 401 may transmit a probe response frame to the STA 301 that transmitted the probe request frame, in response to the probe request frame. In this way, the STA 301 discovers the network. The probe response frame may include information of the AP 401 (e.g., device name and/or network information of the AP 401). While FIG. 3 shows that the network discovery operation is performed through active scanning, the disclosure is not limited thereto. In a case where the STA 301 performs passive scanning, the operations of transmitting the probe request frame and probe response frame may be omitted. Instead, the STA 301 that performs passive scanning may receive a beacon frame transmitted by the AP 401. In this way, the STA 301 discovers the network.

According to an embodiment, after the STA 301 discovers the network, an authentication operation including operation 330 and operation 340 may be performed. In operation 330, the STA 301 may transmit an authentication request frame to the AP 401. In operation 340, the AP 401 may determine whether or not to allow authentication for the corresponding STA 301 based on information contained in the authentication request frame. When the AP 401 determines that authentication is allowed for the STA 301, this is considered to be successful authentication of the STA 301. In operation 340, the AP 401 may provide a result of this authentication processing to the STA 301 via an authentication response frame. The authentication request frame and/or the authentication response frame may correspond to a management frame.

According to an embodiment, the authentication frame may include information on an authentication algorithm number, an authentication transaction sequence number, a status code, a challenge text, a robust security network (RSN), or a finite cyclic group.

According to an embodiment, after successful authentication of the STA 301, an association operation including operation 350 and operation 360 may be performed. In operation 350, the STA 301 may transmit an association request frame to the AP 401. In operation 360, the AP 401 may transmit an association response frame to the STA 301 in response to the association request frame.

According to an embodiment, the association request frame and/or the association response frame may include information related to various capabilities. For example, the association request frame may include information related to various capabilities, a beacon listening interval, an SSID, supported rates, supported channels, an RSN, a mobility domain, supported operating classes, a traffic indication map (TIM) broadcast request, and/or information related to an interworking service capability. For example, the association response frame may include information related to various capabilities, a status code, association ID (AID), supported rates, an enhanced distributed channel access (EDCA) parameter set, a received channel power indicator (RCPI), a received signal-to-noise indicator (RSNI), a mobility domain, a timeout interval (e.g., an association comeback time), an overlapping BSS scan parameter, a TIM broadcast response, and/or information such as a Quality of Service (QoS) map. The AP 401 may determine whether or not to accept or reject association based on information contained in the association request frame. When the AP 401 determines that association is accepted for the STA 301, this is considered to be successful association of the STA 301. In operation 360, the AP 401 may provide a result of this association processing to the STA 301 via an association response frame.

According to an embodiment, after the STA 301 is successfully associated with the network, a security setup operation including operation 370 and operation 380 may be performed. The security setup operation may be performed through a robust security network association (RSNA) request and response. For example, the security setup operation may include an operation of performing private key setup by means of a 4-way handshake using an extensible authentication protocol over LAN (EAPOL) frame.

According to an embodiment, a security session may be established between the STA 301 and the AP 401 according to the security setup operation, and the STA 301 and the AP 401 may proceed with secure data communication.

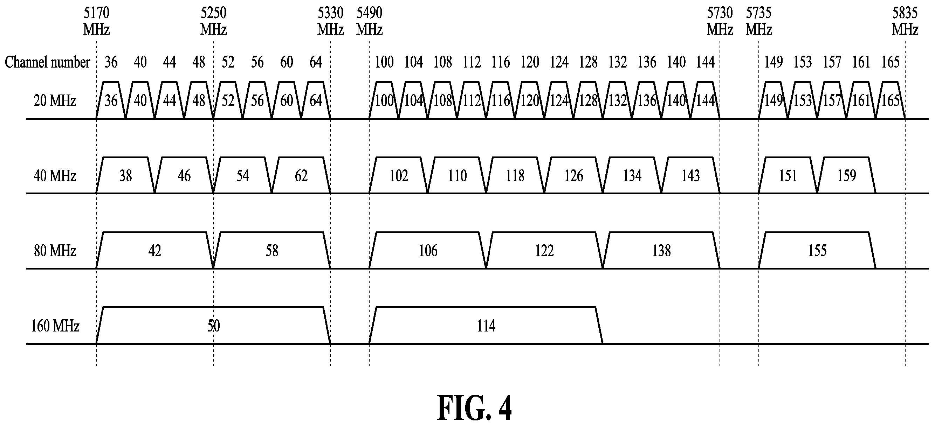

FIG. 4 is a diagram illustrating a frequency band and bandwidth used in a wireless communication system. In the example shown in FIG. 4, the frequency band is a 5 GHz band.

FIG. 4 also shows communication channels, for example, channels 36, 40, 42, 44, 46, 48, 50, and so on, and the channels have a bandwidth of one of: 20 MHz, 40 MHz, 80 MHz and 160 MHz.

Referring to FIG. 4, in a wireless communication system (e.g., a Wi-Fi communication system), transmitting data using a communication channel with a wide bandwidth (e.g., 40 MHz, 80 MHz and 160 MHz) may increase data transmission speed. In general, the wider the bandwidth for data transmission, the faster the transmission speed may be. However, there may be cases where a communication channel with a relatively narrow bandwidth is used. For example, when a distance between an AP (e.g., the AP 401 of FIG. 3) and a client device (e.g., the STA 301 of FIG. 3) is long, communication based on a wide bandwidth may not provide a suitable signal-to-noise ratio (SNR). In another example, even when the AP supports a wide bandwidth (e.g., 160 MHz), a maximum supported bandwidth of the client device (e.g., 80 MHz) may be narrower than a maximum supported bandwidth of the AP (160 MHz). In these examples, a communication channel with a relatively narrow bandwidth may be used.

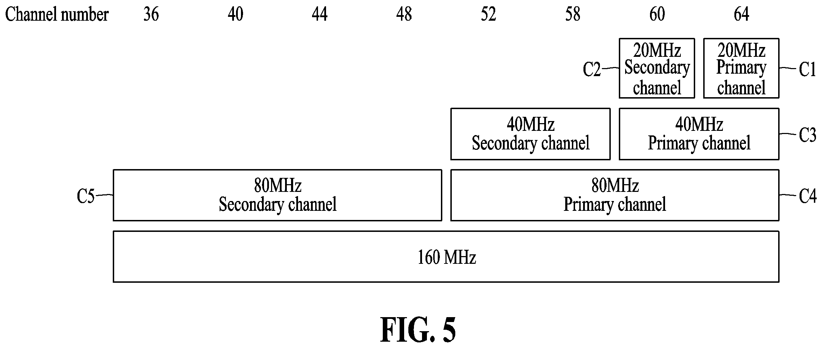

FIG. 5 is a diagram illustrating primary channels and secondary channels in a wireless communication system.

Referring to FIG. 5, in a Wi-Fi network, a primary channel and a secondary channel are concepts used for channel bonding. Channel bonding is a technique for providing a wider bandwidth. For example, a channel C3 with a bandwidth of 40 MHz may be formed by combining a primary channel C1 with a bandwidth of 20 MHz and a secondary channel C2 with a bandwidth of 20 MHz.

Wi-Fi communication, when an AP (e.g., the AP 401 of FIG. 3) and a client device (e.g., the STA 301 of FIG. 3) exchange data with each other using a bandwidth narrower than a maximum supported bandwidth of the AP, the AP and the client device may exchange data under the constraints of a primary channel/secondary channel which has a bandwidth that is narrower than the maximum supported bandwidth of the AP. For example, when an AP and a client device exchange data using a bandwidth of 80 MHz, which is narrower than the maximum supported bandwidth of 160 MHz of the AP, a constraint may be applied that requires a primary channel C4 with 80 MHz bandwidth to be used, other than a secondary channel C5 with 80 MHz bandwidth. The same constraint may be applied when transmitting or receiving up-link (UL) orthogonal frequency division multiple access (OFDMA) and down link (DL) OFDMA. Exchanging data under the constraints of the primary channel/secondary channel causes frequency resource underutilization issues.

In a Wi-Fi communication system, efficient management or allocation of frequency resources improves communication performance and/or communication reliability.

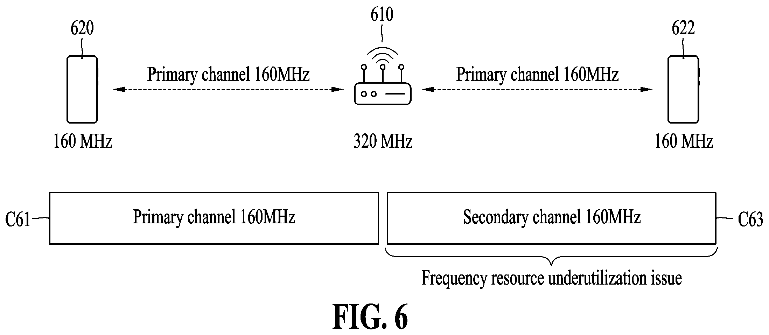

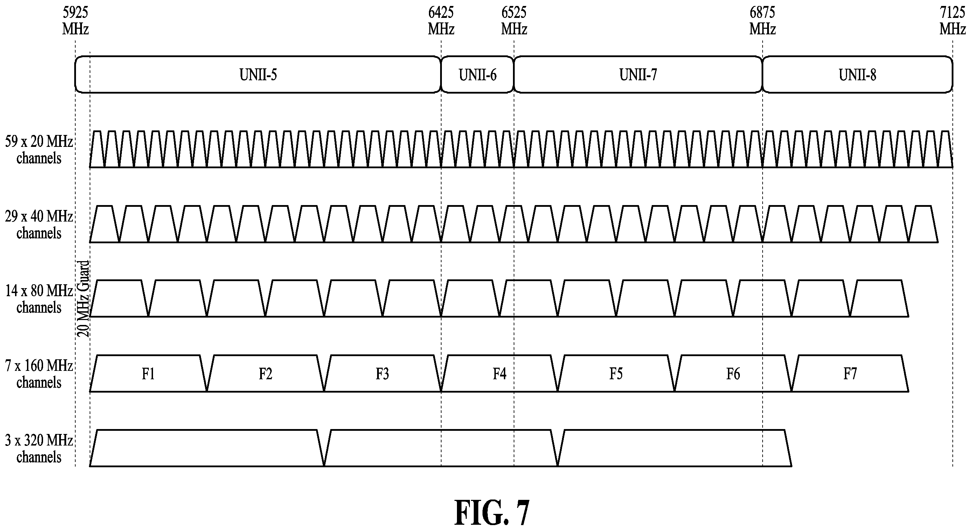

FIGS. 6 and 7 are diagrams for illustrating the frequency resource underutilization issue.

FIG. 6 is a diagram illustrating an example of a communication environment in which a frequency resource underutilization issue may occur.

Referring to FIG. 6, in Wi-Fi communication, when each of a plurality of client devices 620 and 622 (e.g., STAs) exchanges data with an AP 610 using a bandwidth (e.g., 160 MHz) narrower than a maximum supported bandwidth (e.g., 320 MHz) of the AP 610, the AP 610 or each of the plurality of client devices 620 and 622 may use a primary channel C61, from among the primary channel C61 and a secondary channel C63, depending on the constraints of the primary channel C61 and/or secondary channel C63. When some or all of the plurality of client devices 620 and 622 transmit or receive data via the primary channel C61, the congestion of the primary channel C61 may increase. This represents a frequency resource underutilization issue.

FIG. 7 is a diagram for illustrating the frequency resource underutilization issue in high bands.

Referring to FIG. 7, the latest Wi-Fi standards (e.g., Wi-Fi 6E(IEEE 802.11ax) or Wi-Fi 7(IEEE 802.11be)), include utilization of a 6 GHz band. Since a bandwidth of the 6 GHz band (i.e., 1200 MHz) is wider than a bandwidth of the 5 GHz band (i.e., 500 MHz), underutilization of frequency resources due to primary/secondary channel constraints may be a greater issue in the 6 GHz band. For example, when a client device (e.g., a client device 620 or client device 622 of FIG. 6) transmits or receives data using a 160 MHz channel, which has a narrower bandwidth than a maximum supported bandwidth of an AP (e.g., the AP 610 of FIG. 6) (e.g., 320 MHz), only three frequency ranges F2, F4, and F6 among frequency ranges F1 to F7 of the available 160 MHz channels may be used. This is because, in this case, F2, F4 and F6 may be primary channels, whereas F1, F3, F5 and F7 may be secondary channels.

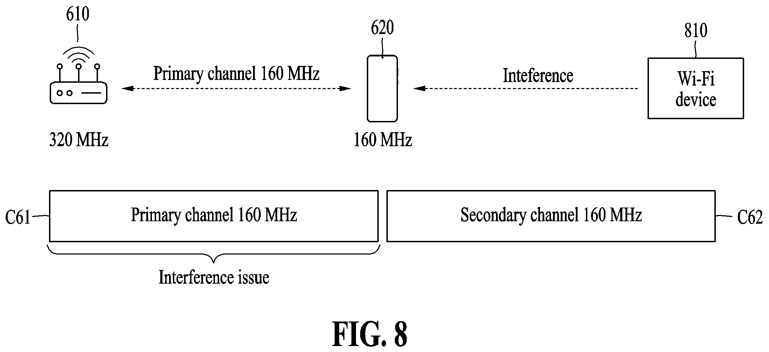

FIG. 8 is a diagram illustrating an example of a communication environment in which a signal interference issue may occur due to constraints of a primary channel/secondary channel.

Referring to FIG. 8, in a Wi-Fi network, while a client device 620 exchanges data with the AP 610 using the primary channel C61 of 160 MHz bandwidth, communication between the client device 620 and the AP 610 may experience interference due to other Wi-Fi devices 810 (e.g., other APs) in the network.

To address issues of frequency resource underutilization and/or signal interference, hereinafter there are described techniques to use a secondary channel C62 (C63 in FIG. 6). One such technique is dynamic subband operation (DSO). DSO is a technique that divides a frequency band into a plurality of subbands and dynamically allocates each of the plurality of subbands.

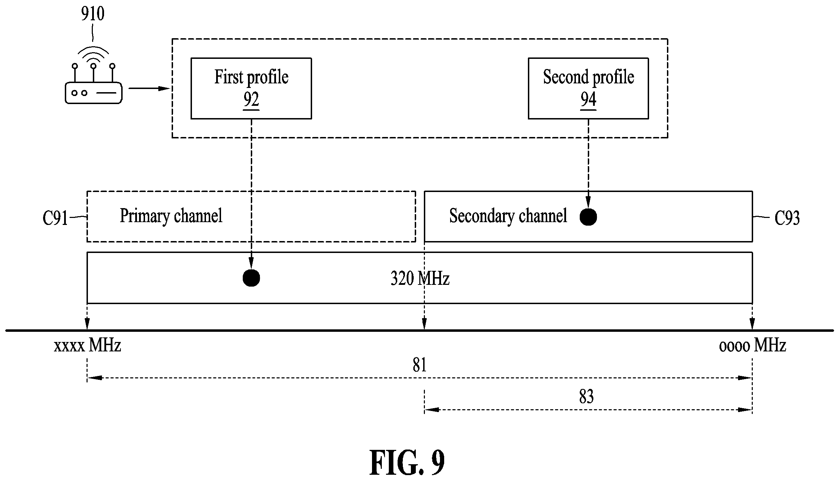

FIG. 9 is a diagram illustrating a protocol for DSO.

Referring to FIG. 9, according to an embodiment, an AP 910 may operate based on at least one of a first profile 92 (e.g., a first AP profile) and a second profile 94 (e.g., a second AP profile).

According to an embodiment, the first profile 92 may be configured to allow the AP 910 to communicate using a set frequency range 81 (e.g., 5945 MHz to 6265 MHz) of a set bandwidth (e.g., 320 MHz) of a set band (e.g., 2.4 GHz, 5 GHz, or 6 GHz).

According to an embodiment, the bandwidth of the first profile 92 may be set to a maximum supported bandwidth of the AP 910 (e.g., 320 MHz when the AP 910 supports Wi-Fi 7), but is not limited thereto. For example, the bandwidth of the first profile 92 may be set to a lower bandwidth (e.g., 160 MHz, 80 MHz, or 40 MHz) than the maximum supported bandwidth of the AP 910 (e.g., 320 MHz).

According to an embodiment, the second profile 94 may be configured to allow the AP 910 to communicate using a frequency range 83 of a secondary channel C93, from among a primary channel C91 and the secondary channel C93. The primary channel C91 and the secondary channel C93 are within the set frequency range 81 of the first profile 92.

In an embodiment, the primary channel C91 and the secondary channel C93 may have the same bandwidth.

In an embodiment, a bandwidth of the primary channel C91 and a bandwidth of the secondary channel C93 are narrower than the set bandwidth of the first profile 92. For example, when the set bandwidth of the first profile 92 is 320 MHz, the bandwidth of the primary channel C91 may be set to one of 160 MHz, 80 MHz, 40 MHz, and 20 MHz, and the bandwidth of the secondary channel C93 may be set to one of 160 MHz, 80 MHz, 40 MHz, and 20 MHz. Hereinafter, for ease of description, an example is described in which the bandwidth of the primary channel C91 and the bandwidth of the secondary channel C93 are each set to half (e.g., 160 MHz) of the set bandwidth (e.g., 320 MHz) of the first profile 92.

In an embodiment, an SSID of the first profile 92 may be identical to an SSID of the second profile 94.

In an embodiment, a security type of the first profile 92 may be identical to a security type of the second profile 94.

According to an embodiment, since the SSID and security type of the first profile 92 are set to be identical to the SSID and security type of the second profile 94 respectively, a connection transition may be performed at a Wi-Fi link level without change of an internet protocol (IP) layer (or network layer). For example, the connection transition may be performed through hand-over or roaming. This ensures smooth, uninterrupted transitions between the first and second profiles.

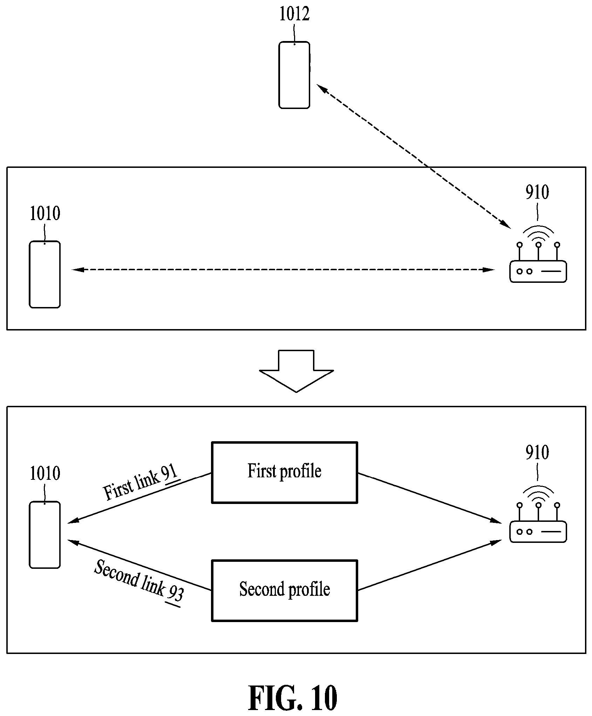

FIG. 10 is a diagram illustrating a protocol for DSO when multiple links exist in a communication environment. The communication environment (e.g., the number of client devices or the number of links) illustrated in FIG. 10 is only exemplary, and the present disclosure is not limited thereto. For example, in an embodiment, only one client device (e.g., a client device 1010) may be communicatively connected to the AP 910.

Referring to FIG. 10, according to an embodiment, when each of a plurality of client devices 1010 and 1012 exchanges data with the AP 910, at least one client device 1010 among the plurality of client devices 1010 and 1012 may exchange data with the AP 910 using multiple links, e.g., a first link 91 and a second link 93. The multiple links 91 and 93 may be formed using a multi-link operation (MLO) which allows the client device 1010 and/or the AP 910 to transmit and/or receive data simultaneously on different frequency bands and/or channels.

According to an embodiment, the multiple links 91 and 93 may include a link (e.g., the first link 91) generated based on a first profile of the AP 910 (e.g., the first profile 92 of FIG. 9) and another link (e.g., the second link 93) generated based on a second profile of the AP 910 (e.g., the second profile 94 of FIG. 9).

According to an embodiment, the AP 910 and/or the client device 1010 may perform (or initiate) a protocol for DSO based on communication parameters (e.g., Wi-Fi performance metrics). For example, the AP 910 and/or the client device 1010 may determine a congestion of the first profile-based link 91 based on communication parameters (e.g., received signal strength indicator (RSSI), signal-to-noise ratio (SNR), transmitting/receiving (TX/RX) rate, and/or latency). The AP 910 and/or the client device 1010 may perform (or initiate) a protocol for DSO based on the determined congestion of the first profile-based link 91 being greater than or equal to a threshold value. As another example, the AP 910 and/or the client device 1010 may determine whether signal interference exists in the first profile-based link 91 based on the communication parameters. The AP 910 and/or the client device 1010 may perform (or initiate) a protocol for DSO based on a determination that signal interference exists in the first profile-based link 91.

According to an embodiment, when a communication quality issue (e.g., channel congestion and/or signal interference) exists in the first profile-based link 91, the AP 910 and/or the client device 1010 may transmit and/or receive data using the second profile-based link 93 between the first profile-based link 91 and the second profile-based link 93.

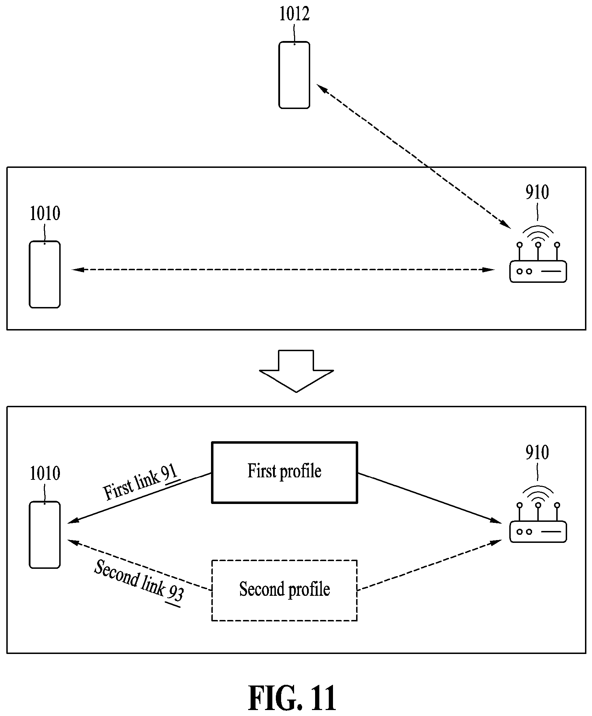

FIG. 11 is a diagram illustrating a protocol for DSO when a single link exists, i.e., when multiple links do not currently exist. This is represented by the dashed lines of the second link 93 and the second profile. FIG. 11 is a diagram illustrating a protocol for DSO when a link based on a first profile (e.g., the first profile 92 of FIG. 9) of the AP 910 is formed between the client device 1010 and the AP 910 without a link based on a second profile (e.g., the second profile 94 of FIG. 9) of the AP 910. Description of any content that overlaps with that described with reference to FIGS. 9 and 10 is omitted.

Referring to FIG. 11, according to an embodiment, when a communication quality issue (e.g., channel congestion and/or signal interference) exists in the first profile-based link 91, the AP 910 and/or the client device 1010 may unassociate the first profile-based link 91 and generate (or form) the second profile-based link 93.

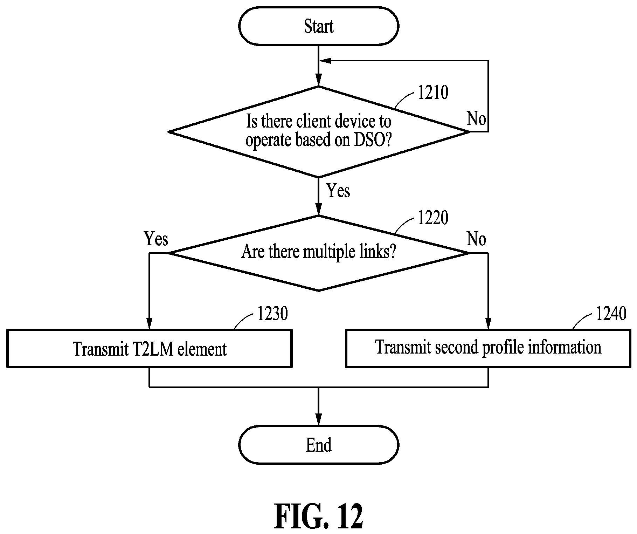

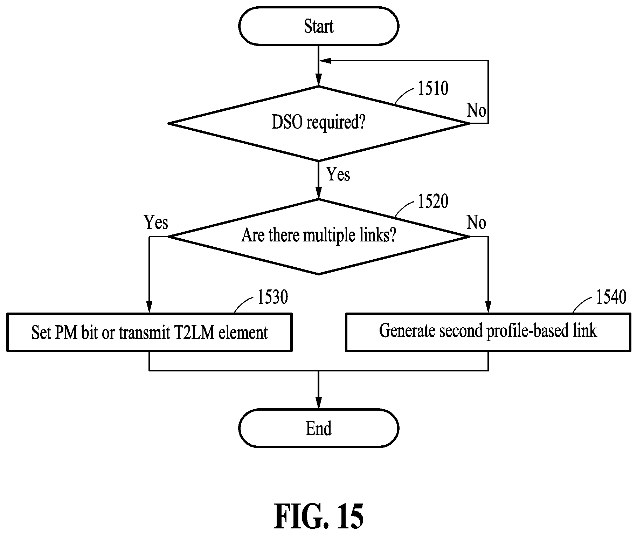

A protocol for DSO when there are no multiple links between the AP 910 and the client device 1010 is described in detail with reference to FIG. 12 or FIG. 15.

FIG. 12 is a flowchart illustrating operations of an AP for DSO, in particular, where a transition between a first and second profile is controlled by the AP.

Referring to FIG. 12, according to an embodiment, operations 1210 to 1240 may be sequentially performed but this disclosure is not limited thereto. For example, operations 1210 and 1220 may be performed in parallel, or operation 1220 may be performed before operation 1210.

In operation 1210, according to an embodiment, an AP broadcasting a Wi-Fi signal (e.g., the AP 910 of FIGS. 9 to 11) may determine whether there is a client device to operate based on DSO currently connected to the AP 910. For example, it may be determined whether there is a client device, from among at least one client device (e.g., the client devices 1010 and 1012 of FIG. 10 or FIG. 11) connected to the AP 910.

According to an embodiment, the AP 910 may use communication parameters to determine whether to operate the client device based on the DSO. For example, the AP 910 may use at least one communication parameter related to communication quality (e.g., RSSI, SNR, TX/RX rate, and/or latency) to determine whether a channel being used is congested and/or whether signal interference exists.

According to an embodiment, if it is determined that the channel being used is congested and/or that signal interference exists, the AP 910 may determine to operate the client device based on DSO.

According to an embodiment, when a plurality of client devices (e.g., the client devices 1010 and 1012 of FIGS. 10 and 11) are connected to the AP 910, the AP 910 may select a client device to operate based on DSO, from among the plurality of client devices 1010 and 1012. The selection may be based on QoS requirement information of each of the plurality of client devices 1010 and 1012. For example, when each of the plurality of client devices 1010 and 1012 is exchanging data with the AP 910 using a first profile-based link (e.g., the first link 91 of FIG. 10 or FIG. 11) and the first link 91 is congested, the AP 910 may select a client device having a relatively low QoS priority among the plurality of client devices 1010 and 1012 as a device to operate based on a second profile-based link (e.g., the second link 93 of FIG. 10 and FIG. 11), i.e., the device to operate based on DSO.

In operation 1220, according to an embodiment, when there is a client device (e.g., the client device 1010 of FIG. 10) to operate based on DSO, the AP 910 may determine whether multiple links (e.g., the first link 91 and second link 93 of FIG. 10) currently exist (or are formed) between the client device 1010 and the AP 910.

In operation 1230, according to an embodiment, when the multiple links 91 and 93 currently exist, the AP 910 may exchange data with the client device 1010 using the second profile-based link 93 among the first profile-based link 91 and the second profile-based link 93.

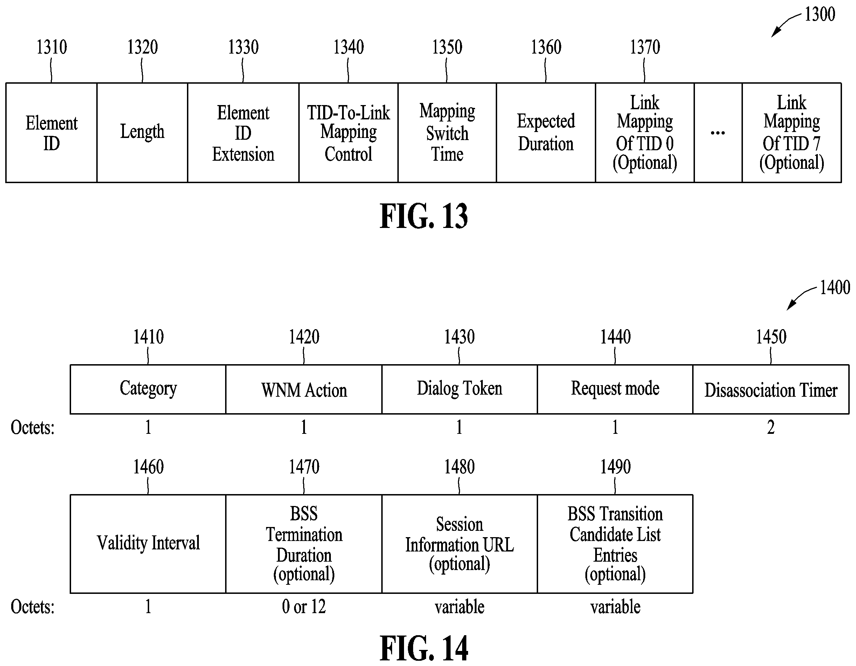

According to an embodiment, the AP 910 may transmit a traffic identifier to link mapping element (T2LM element) to the client device 1010 to use the second profile-based link 93. The T2LM element is described in detail with reference to FIG. 13.

In operation 1240, according to an embodiment, when the second profile-based link 93 does not exist and the first profile-based link 91 exists, the AP 910 may unassociate the first profile-based link 91 and generate the second profile-based link 93.

According to an embodiment, the AP 910 may transmit a basic service set transition management (BTM) request frame, to the client device 1010 to generate the second profile-based link 93. The BTM request frame is described in detail with reference to FIG. 14.

FIG. 13 is a diagram illustrating a T2LM element.

Referring to FIG. 13, according to an embodiment, an AP (e.g., the AP 910 of FIGS. 9 to 11) may transmit a T2LM element 1300 to a client device (e.g., the client device 1010 of FIG. 10) to exchange data with the client device (e.g., the client device 1010 of FIG. 10) using the second profile-based link 93, from among the currently formed multiple links (e.g., the first link 91 and second link 93 of FIG. 10).

According to an embodiment, the T2LM element 1300 may include a plurality of fields 1310 to 1370.

According to an embodiment, the Element ID field 1310 may be an identifier (ID) for identifying the T2LM element.

According to an embodiment, the Length field 1320 may provide information on a length of the T2LM element.

In an embodiment, the Element ID Extension field 1330 may be an ID extension field that may be additionally used.

According to an embodiment, the field 1340 may be a field for controlling a mapping between a traffic identifier (TID) and a link.

According to an embodiment, the Mapping Switch Time field 1350 may be a field for managing a time required for mapping switching between links.

According to an embodiment, the Expected Duration field 1360 may provide information on a duration of a link mapped to a TID.

According to an embodiment, the Link Mapping of TID field(s) 1370 may be a field or fields for mapping each of the TIDs to a particular link. The AP 910 may set a value of the Link Mapping of TID field(s) 1370 to exchange data with the client device 1010 via the second profile-based link 93 among multiple links 91 and 93. For example, the AP 910 may map all TIDs to the second profile-based link 93 by setting a value of the Link Mapping of TID field(s) 1370.

According to an embodiment, the AP 910 may set a value of the Link Mapping of TID field(s) 1370 and then transmit the T2LM element 1300 to the client device 1010.

FIG. 14 is a diagram illustrating a BTM request frame.

Referring to FIG. 14, according to an embodiment, an AP (e.g., the AP 910 of FIGS. 9 to 11) may transmit a BTM request frame 1400 to a client device (e.g., the client device 1010 of FIG. 11) to unassociate a currently formed first profile-based link (e.g., the first link 91 of FIG. 11) and generate (or form) a second profile-based link (e.g., the second link 93 of FIG. 11).

According to an embodiment, the BTM request frame 1400 may include a plurality of fields 1410 to 1490.

According to an embodiment, the Category field 1410 may provide category information of the BTM request frame 1400.

According to an embodiment, the Wireless Network Management (WNM) Action field 1420 may provide information a BSS transition request from the AP to the client device.

In an embodiment, the Dialog Token field 1430 may provide information to identify a request from the AP to the client device.

According to an embodiment, the Request mode field 1440 may provide information related to an action that the AP requests from the client device.

According to an embodiment, the Disassociation Timer field 1450 may provide information on a time remaining until an association within a current BSS is terminated.

According to an embodiment, the Validity Interval field 1460 may provide information on a validity time interval of a BSS transition request.

According to an embodiment, the BSS Termination Duration field 1470 may provide information on a termination time point of a current BSS.

According to an embodiment, the Session Information URL field 1480 may provide information required for BSS transition (e.g., information required for maintaining an existing session).

In an embodiment, the BSS Transition Candidate List Entries field 1490 may provide information (e.g., a list) on candidate BSSs to which the client may transition. The AP 910 may provide information on a second profile (e.g., the second profile 94 of FIG. 9) to the client device 1010 using the BSS Transition Candidate List Entries field 1490 to generate the second profile-based link 93. The client device 1010 may newly generate the second profile-based link 93 based on information included in the BSS Transition Candidate List Entries field 1490 of the BTM request frame 1400.

FIG. 15 is a flowchart illustrating operations of a client device for DSO, in particular, where a transition between a first and second profile is controlled by the client device.

Referring to FIG. 15, according to an embodiment, operations 1510 to 1540 may be sequentially performed, but this disclosure is not limited thereto. For example, operations 1510 and 1520 may be performed in parallel, or operation 1520 may be performed before operation 1510.

In operation 1510, according to an embodiment, a client device (e.g., the client device 1010 of FIG. 10 or FIG. 11) connected to an AP (e.g., the AP 910 of FIG. 10 or FIG. 11) may determine whether the requirements to use the DSO of the client device 1010 are met.

In an embodiment, the client device 1010 may use communication parameters to determine whether the requirements are met. For example, the client device 1010 may use at least one communication parameter related to communication quality (e.g., RSSI, SNR, TX/RX rate, and/or latency) to determine whether a channel being used is congested and/or whether signal interference exists.

If it is determined that the channel being used is congested and/or that signal interference exists, the client device 1010 may perform (or initiate) a protocol for DSO.

In operation 1520, according to an embodiment, when DSO is required, the client device 1010 may determine whether multiple links (e.g., the first link 91 and the second link 93 of FIG. 10) currently exist between the client device 1010 and the AP 910.

In operation 1530, according to an embodiment, when the multiple links 91 and 93 currently exist, the client device 1010 may form (or adjust) a state of the first profile-based link 91 and a state of the second profile-based link 93 into a doze/sleep state and an awake state, respectively, in order to exchange data with the AP 910 using the second profile-based link 93 among the multiple links 91 and 93. For example, the client device 1010 may set the PM bit of the MAC header corresponding to the first link 91 to adjust the state of the first link 91 to a sleep mode (i.e., a power save mode). For example, the client device 1010 may set the PM bit of the MAC header corresponding to the second link 93 to adjust the state of the second link 93 to an awake mode.

According to an embodiment, the client device 1010 may set a power management (PM) bit of a media access control (MAC) header corresponding to each of the multiple links 91 and 93 to adjust (or change) a state of the first profile-based link 91 and a state of the second profile-based link 93.

According to an embodiment, when the multiple links 91 and 93 currently exist, the client device 1010 may transmit a T2LM element to the AP 910 to exchange data with the AP 910 by using the second profile-based link 93 among the multiple links 91 and 93. Since the T2LM element transmission of the client device 1010 may be substantially the same as the T2LM element transmission of the AP 910 as described with reference to operation 1230 of FIG. 12, a repeated discussion thereof is omitted.

In operation 1540, according to an embodiment, when the multiple links 91 and 93 do not both currently exist, but the first profile-based link 91 does currently exist, the client device 1010 may unassociate the first profile-based link 91 and generate the second profile-based link 93. The client device 1010 may use information on a second profile (e.g., the second profile 94 of FIG. 9) to generate the second profile-based link 93. The information on the second profile 94 may be provided by the AP 910. For example, the AP 910 may provide the information on the second profile 94 to the client device 1010 by using a BTM request frame (e.g., the BTM request frame 1400 of FIG. 14).

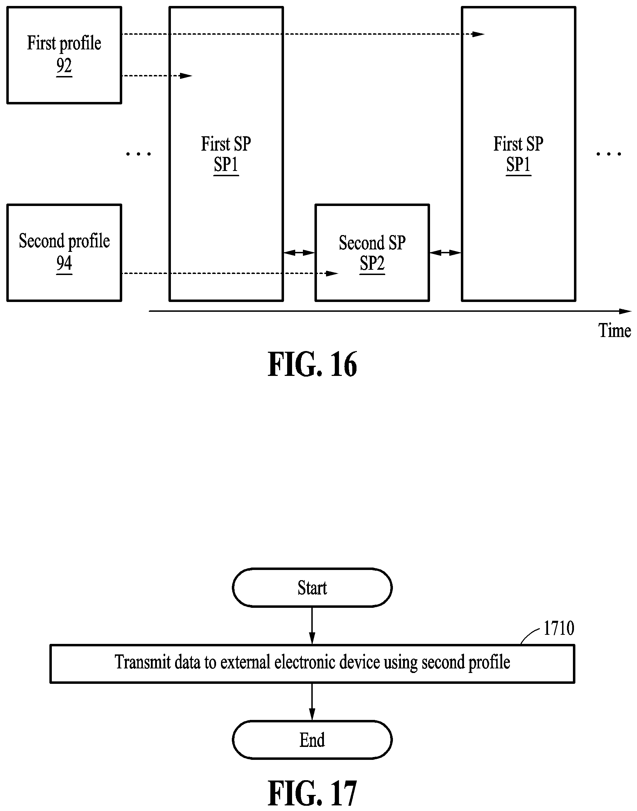

FIG. 16 is a diagram illustrating profile-based media control.

Referring to FIG. 16, according to an embodiment, an AP (e.g., the AP 910 of FIGS. 9 to 11) may perform an operation to prevent a wireless transmission medium from being used for a set channel (e.g., the secondary channel C93 of FIG. 9) of the second profile 94 while data is being transmitted or received using the entire frequency range (e.g., the frequency range 81 of FIG. 9) of the first profile 92. For example, the AP 910 may set the second profile 94 such that a service period (SP) SP1 during which the entire frequency range 81 of the first profile 92 is used does not temporally overlap with an SP during which the channel C93 of the second profile 94 is used. For example, the AP 910 may set a value of a duration field of a MAC header in a Wi-Fi frame (e.g., a control frame or a data frame) so that the SPs SP1 and SP2 do not overlap each other.

FIG. 17 is a flowchart illustrating an operation of an electronic device.

Referring to FIG. 17, according to an embodiment, in operation 1710, when a first link (e.g., the first link 91 of FIG. 10 or FIG. 11) based on a first profile (e.g., the first profile 92 of FIG. 9 or FIG. 16) of an external electronic device broadcasting a Wi-Fi signal (e.g., the AP 401 of FIG. 4 or the AP 910 of FIG. 10 or 11) is formed, an electronic device (e.g., the STA 301 of FIG. 3 or the client device 1010 of FIG. 10 or 11) may transmit data to the external electronic device by using a second profile, based on a presence of a second link (e.g., the second link 93 of FIG. 10 or 11) based on a second profile (e.g., the second profile 94 of FIG. 9 or 16) of the external electronic device.

According to an embodiment, the first profile (e.g., the first profile 92 of FIG. 9 or FIG. 16) may be configured to allow the external electronic device (e.g., the AP 401 of FIG. 4 or the AP 910 of FIG. 10 or FIG. 11) to exchange data with the electronic device (e.g., the STA 301 of FIG. 3 or the client device 1010 of FIG. 10 or FIG. 11) by using a frequency range of a first bandwidth (e.g., the frequency range 81 of FIG. 9).

According to an embodiment, the second profile (e.g., the second profile 94 of FIG. 9 or FIG. 16) may be configured to allow the external electronic device (e.g., the AP 401 of FIG. 4 or the AP 910 of FIG. 10 or 11) to exchange data with the electronic device (e.g., the STA 301 of FIG. 3 or the client device 1010 of FIG. 10 or 11) using a secondary channel, from among a primary channel (e.g., the primary channel C91 of FIG. 9) and the secondary channel (e.g., the secondary channel C93 of FIG. 9). The secondary channel (e.g., the secondary channel C93 of FIG. 9) may be a channel within the frequency range (e.g., the frequency range 81 of FIG. 9) of the first profile (e.g., the first profile 92 of FIG. 9 or FIG. 16). The primary channel (e.g., the primary channel C91 of FIG. 9) may also be a channel within the frequency range (e.g., the frequency range 81 of FIG. 9) of the first profile (e.g., the first profile 92 of FIG. 9 or FIG. 16). According to one embodiment, by using the first profile and/or the second profile, a method may be provided that enables data exchange not only through a primary channel but also through a secondary channel. By exchanging data through the secondary channel, a method may be provided that improves the utilization of frequency resources and enhances communication quality.

FIG. 18 is a block diagram of an electronic device 1801 (e.g., the STA 301 of FIG. 3 or the client device 1010 of FIG. 10 or FIG. 11) in a network environment 1800. Referring to FIG. 18, in the network environment 1800, the electronic device 1801 may communicate with an electronic device 1802 (e.g., the AP 401 of FIG. 4 or the AP 910 of FIG. 9, 10 or 11) through a first network 1898 (e.g., a short-range wireless communication network), or may communicate with at least one of an electronic device 1804 or a server 1808 through a second network 1899 (e.g., a long-range wireless communication network). According to an embodiment, the electronic device 1801 may communicate with the electronic device 1804 via the server 1808. According to an embodiment, the electronic device 1801 may include at least one of a processor 1820, a memory 1830, an input module 1850, a sound output module 1855, a display module 1860, an audio module 1870, and a sensor module 1876, an interface 1877, a connecting terminal 1878, a haptic module 1879, a camera module 1880, a power management module 1888, a battery 1889, a communication module 1890, a subscriber identification module (SIM) 1896, and an antenna module 1897. In some embodiments, at least one of the components may be omitted from the electronic device 1801, or one or more other components may be added to the electronic device 1801. In some embodiments, some of the components (e.g., the sensor module 1876, the camera module 1880, or the antenna module 1897) may be integrated as a single component (e.g., they may be integrated into the display module 1860).

The processor 1820 may execute, for example, software (e.g., a program 1840) to control at least one other component (e.g., a hardware or software component) of the electronic device 1801 to perform various data processing or computations. According to an embodiment, as at least part of data processing or computation, the processor 1820 may store a command or data received from another component (e.g., the sensor module 1876 or the communication module 1890) in a volatile memory 1832, process the command or the data stored in the volatile memory 1832, and store resulting data in a non-volatile memory 1834. According to an embodiment, the processor 1820 may include at least one of a main processor 1821 (e.g., a central processing unit (CPU) and/or an application processor) and an auxiliary processor 1823 (e.g., a graphics processing unit (GPU), a neural processing unit (NPU), an image signal processor (ISP), a sensor hub processor, and/or a communication processor (CP)) that is operable independently of, or in conjunction with the main processor 1821. For example, when the electronic device 1801 includes the main processor 1821 and the auxiliary processor 1823, the auxiliary processor 1823 may be adapted to consume less power than the main processor 1821 or to be specialized to perform a specific function. The auxiliary processor 1823 may be implemented separately from the main processor 1821 or as a part of the main processor 1821. Thus, the processor 1820 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The auxiliary processor 1823 may control at least some of functions or states related to at least one of the components of the electronic device 1801 (e.g., the display module 1860, the sensor module 1876, or the communication module 1890), instead of the main processor 1821 while the main processor 1821 is in an inactive (e.g., sleep) state, or along with the main processor 1821 while the main processor 1821 is an active state (e.g., in an awake state, e.g., while executing an application). According to an embodiment, the auxiliary processor 1823 (e.g., an ISP and/or a CP) may be implemented as a portion of another component that is functionally related to the auxiliary processor 1823 (e.g., the camera module 1880 and/or the communication module 1890). According to an embodiment, the auxiliary processor 1823 (e.g., an NPU) may include a hardware structure for artificial intelligence (AI) model processing. The AI model may be generated by machine learning. The machine learning may be performed by, for example, the electronic device 1801, in which artificial intelligence is performed, or performed via a separate server (e.g., the server 1808). Machine learning algorithms may include, but are not limited to, for example, supervised learning, unsupervised learning, semi-supervised learning, and reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but this disclosure is not limited thereto. The AI model may additionally or alternatively include a structure other than the hardware structure, i.e., a software structure.

The memory 1830 may store data used by at least one component (e.g., the processor 1820 or the sensor module 1876) of the electronic device 1801. The data may include, for example, software (e.g., the program 1840) and input data or output data for a command related thereto. The memory 1830 may include the volatile memory 1832 and/or the non-volatile memory 1834. According to an embodiment, when the instructions stored in the memory 1830 are individually, selectively, or collectively executed by at least one processor (e.g., the main processor 1821 and/or the auxiliary processor 1823), the instructions may cause the electronic device 1801 to perform at least one operation. For example, the instructions stored in the memory 1830 may be executed by one processor (e.g., the main processor 1821 or the auxiliary processor 1823 such as a communication processor) or a plurality of processors (e.g., the main processor 1821 and the auxiliary processor 1823) operating cooperatively.

The program 1840 may be stored as software in the memory 1830 and may include at least one of, for example, an operating system (OS) 1842, middleware 1844, and an application 1846.

The input module 1850 may receive, from outside the electronic device 1801 (e.g., from a user of the electronic device 1801), an input, a command and/or data to be used by another component of the electronic device 1801 (e.g., the processor 1820). The input module 1850 may include, for example, a microphone, a mouse, a keyboard, a key (e.g., a button), or a digital pen (e.g., a stylus pen).

The sound output module 1855 may output a sound signal to the outside of the electronic device 1801. The sound output module 1855 may include at least one of, for example, a speaker and a receiver. The speaker may be used for general purposes, such as playing multimedia or media. The receiver may be used to receive an incoming call. According to an embodiment, the receiver may be implemented separately from the speaker or as a part of the speaker.

The display module 1860 may visually provide information to the outside of the electronic device 1801 (e.g., to a user of the electronic device 1801). The display module 1860 may include at least one of, for example, a display, a hologram device, and a projector. The display module 1860 may also include corresponding control circuitry to control a corresponding one of the display, the hologram device, and the projector. According to an embodiment, the display module 1860 may include a touch sensor adapted to sense a touch, or a pressure sensor adapted to measure an intensity of a force incurred by the touch.

The audio module 1870 may convert a sound into an electric signal and vice versa. According to an embodiment, the audio module 1870 may obtain the sound via the input module 1850 or output the sound via the sound output module 1855 or an external electronic device (e.g., the electronic device 1802 such as a speaker or a headphone) directly or wirelessly coupled with the electronic device 1801.

The sensor module 1876 may detect an operational state (e.g., power or temperature) of the electronic device 1801 or an environmental state (e.g., a state of a user) external to the electronic device 1801, and generate an electrical signal or data value corresponding to the detected state. According to an embodiment, the sensor module 1876 may include at least one of, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, and an illuminance sensor.

The interface 1877 may support one or more specified protocols to be used for the electronic device 1801 to be coupled with the external electronic device (e.g., the electronic device 1802) directly (e.g., by wire) or wirelessly. According to an embodiment, the interface 1877 may include at least one of, for example, a high-definition multimedia interface (HDMI), a universal serial bus (USB) interface, a secure digital (SD) card interface, and an audio interface.

The connecting terminal 1878 may include a connector via which the electronic device 1801 may be physically connected to an external electronic device (e.g., the electronic device 1802). According to an embodiment, the connecting terminal 1878 may include at least one of, for example, an HDMI connector, a USB connector, an SD card connector, and an audio connector (e.g., a headphone connector).

The haptic module 1879 may convert an electric signal into a mechanical stimulus (e.g., a vibration or a movement) or an electrical stimulus which may be recognized by a user via the user's tactile sensation or kinesthetic sensation. According to an embodiment, the haptic module 1879 may include at least one of, for example, a motor, a piezoelectric element, and an electric stimulator.

The camera module 1880 may capture a still image and moving images. According to an embodiment, the camera module 1880 may include one or more lenses, image sensors, ISPs, and/or flashes.

The power management module 1888 may manage power supplied to the electronic device 1801. According to an embodiment, the power management module 1888 may be implemented as, for example, at least a part of a power management integrated circuit (PMIC).

The battery 1889 may supply power to at least one component of the electronic device 1801. According to an embodiment, the battery 1889 may include at least one of, for example, a primary cell which is not rechargeable, a secondary cell which is rechargeable, and a fuel cell.

The communication module 1890 may support establishing a direct (e.g., wired) communication channel or a wireless communication channel between the electronic device 1801 and the external electronic device (e.g., the electronic device 1802, the electronic device 1804, or the server 1808) and performing communication via the established communication channel. The communication module 1890 may include one or more CPs that are operable independently of the processor 1820 (e.g., an AP) and that support a direct (e.g., wired) communication or a wireless communication. According to an embodiment, the communication module 1890 may include a wireless communication module 1892 (e.g., a cellular communication module, a short-range wireless communication module, and/or a global navigation satellite system (GNSS) communication module) and/or a wired communication module 1894 (e.g., a local area network (LAN) communication module, and/or a power line communication (PLC) module). A corresponding one of these communication modules may communicate with the external electronic device 1804 via the first network 1898 (e.g., a short-range communication network, such as BluetoothTM, Wi-Fi direct, or infrared data association (IrDA)) and/or the second network 1899 (e.g., a long-range communication network, such as a legacy cellular network, a fifth generation (5G) network, a next-generation communication network, the Internet, or a computer network (e.g., a LAN or a wide area network (WAN))). These various types of communication modules may be implemented as a single component (e.g., a single chip), or may be implemented as multi components (e.g., multi chips) separate from each other. The wireless communication module 1892 may identify and authenticate the electronic device 1801 in a communication network, such as the first network 1898 or the second network 1899, using subscriber information (e.g., international mobile subscriber identity (IMSI)) stored in the SIM 1896.

The wireless communication module 1892 may support a 5G network and/or a 4G network, and/or next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1892 may support a high-frequency band (e.g., a millimeter wave (mmWave) band) to achieve, e.g., a high data transmission rate. The wireless communication module 1892 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 1892 may support various requirements specified in the electronic device 1801, an external electronic device (e.g., the electronic device 1804), or a network system (e.g., the second network 1899). According to an embodiment, the wireless communication module 1892 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 1897 may transmit or receive a signal and/or power to or from the outside of the electronic device 1801 (e.g., to or from an external electronic device). According to an embodiment, the antenna module 1897 may include an antenna including a radiating element including a conductive material or a conductive pattern formed in or on a substrate (e.g., a printed circuit board (PCB)). According to an embodiment, the antenna module 1897 may include a plurality of antennas (e.g., array antennas). In such a case, at least one antenna appropriate for a communication scheme used in a communication network, such as the first network 1898 or the second network 1899, may be selected by, for example, the communication module 1890 from the plurality of antennas. The signal or power may be transmitted or received between the communication module 1890 and the external electronic device via the at least one selected antenna. According to an embodiment, another component (e.g., a radio frequency integrated circuit (RFIC)) other than the radiating element may be additionally formed as a part of the antenna module 1897.

According to an embodiment, the antenna module 1897 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled and signals (e.g., commands or data) may be communicated therebetween via an inter-peripheral communication scheme (e.g., a bus, general purpose input and output (GPIO), serial peripheral interface (SPI), and/or mobile industry processor interface (MIPI)).

According to an embodiment, commands or data may be transmitted or received between the electronic device 1801 and the external electronic device 1804 via the server 1808 coupled with the second network 1899. Each of the external electronic devices 1802 or 1804 may be the same or a different type of device as the electronic device 1801. According to an embodiment, all or some of operations to be executed by the electronic device 1801 may be executed at one or more external electronic devices (e.g., the external devices 1802 and 1804, or the server 1808). For example, if the electronic device 1801 needs to perform a function or a service automatically, or in response to a request from a user or another device, the electronic device 1801, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer an outcome of the performing to the electronic device 1801. The electronic device 1801 may provide the outcome, with or without further processing of the outcome, as at least part of a reply to the request. To that end, a cloud computing, distributed computing, mobile edge computing (MEC), or client-server computing technology may be used, for example. The electronic device 1801 may provide ultra low-latency services using, e.g., distributed computing or MEC. In an embodiment, the external electronic device 1804 may include an Internet-of-things (IoT) device. The server 1808 may be an intelligent server using machine learning and/or a neural network. According to an embodiment, the external electronic device 1804 and/or the server 1808 may be included in the second network 1899. The electronic device 1801 may be applied to intelligent services (e.g., a smart home, a smart city, a smart car, or healthcare) based on 5G communication technology or the like, or IoT-related technology.

An electronic device 301, 1010, 1801 according to an embodiment may include at least one processor 1820 including processing circuitry and memory 1830 storing instructions. The instructions, when executed by the at least one processor 1820 individually or collectively, may cause the electronic device 301, 1010, 1801 to, after a first link 91 is formed between the electronic device 301, 1010, 1801 and an external electronic device 401, 910, 1804 based on a first profile 92 of the external electronic device 401, 910, 1804 broadcasting a Wi-Fi signal, based on a presence of a second link 93 between the electronic device 301, 1010, 1801 and the external electronic device 401, 910, 1804 based on a second profile 94 of the external electronic device 401, 910, 1804, transmit data to the external electronic device 401, 910, 1804 by using the second profile 94. The first profile 92 may be configured such that the external electronic device 401, 910, 1804 exchanges data with the electronic device 301, 1010, 1801 using a frequency range 81 of a first bandwidth. The second profile 94 may be configured such that the external electronic device 401, 910, 1804 exchanges data with the electronic device 301, 1010, 1801 using, among a primary channel C91 and a secondary channel C93, the secondary channel C93 in the frequency range 81.

The instructions, when executed by the at least one processor 1820 individually or collectively, may further cause the electronic device 301, 1010, 1801 to, while the first link 91 is formed, determine interference on the primary channel C91 of the first link 91 by another client device connected to the external electronic device 401, 910, 1804. The instructions, when executed by the at least one processor 1820 individually or collectively, may further cause the electronic device 301, 1010, 1801 to, in response to the determination that the interference exists, transmit data to the external electronic device 401, 910, 1804 using the second profile 94 based on whether the second link 93 is present.

The instructions, when executed by the at least one processor 1820 individually or collectively, may further cause the electronic device 301, 1010, 1801 to, when the first link 91 and the second link 93 are currently formed, transmit data to the external electronic device 401, 910, 1804 by using the second link 93 among the first link 91 and the second link 93, based on a setting of a PM bit. The instructions, when executed by the at least one processor 1820 individually or collectively, may further cause the electronic device 301, 1010, 1801 to, when only the first link 91 of the first link 91 and the second link 93 is currently formed, unassociate the first link 91 and generate the second link 93 with the external electronic device 401, 910, 1804 based on the second profile 94.

The instructions, when executed by the at least one processor 1820 individually or collectively, may further cause the electronic device 301, 1010, 1801 to, when the first link 91 and the second link 93 are currently formed, respectively adjust the first link 91 and the second link 93 to a doze state and an awake state through the setting of the PM bit.

The instructions, when executed by the at least one processor 1820 individually or collectively, may further cause the electronic device 301, 1010, 1801 to, when only the first link 91 of the first link 91 and the second link 93 is currently formed, generate the second link 93 based on a BTM request frame 1400 received from the external electronic device 401, 910, 1804. The BTM request frame 1400 may include information on the second profile 94.

An SSID of the first profile 92 may be identical to an SSID of the second profile 94.

A security type of the first profile 92 may be identical to a security type of the second profile 94.

A second bandwidth of each of the primary channel C91 and the secondary channel C93 may be half of the first bandwidth.

The second profile 94 may be configured such that an SP SP2 for the secondary channel C93 between the external electronic device 401, 910, 1804 and the electronic device 301, 1010, 1801 does not temporally overlap with an SP SP1 for transmitting data using the frequency range 81 of the first bandwidth.

A maximum bandwidth supported by the external electronic device 401, 910, 1804 may be wider than a maximum bandwidth supported by the electronic device 301, 1010, 1801.

An electronic device broadcasting a Wi-Fi signal according to an embodiment may include at least one processor 1820 including processing circuitry and memory 1830 storing instructions. The instructions, when executed by the at least one processor 1820 individually or collectively, may cause the electronic device 401, 910, 1804 to, after a first link 91 is formed between the electronic device 401, 910, 1804 and an external electronic device 301, 1010, 1801 based on a first profile 92 of the external electronic device 301, 1010, 1801, based on a presence of a second link 93 between the electronic device 401, 910, 1804 and the external electronic device 301, 1010, 1801 based on a second profile 94 of the electronic device 401, 910, 1804, transmit data to the external electronic device 301, 1010, 1801 by using the second profile 94. The first profile 92 may be configured such that the external electronic device 301, 1010, 1801 exchanges data with the electronic device 401, 910, 1804 using a frequency range 81 of a first bandwidth. The second profile 94 may be configured such that the electronic device 401, 910, 1804 exchanges data with the external electronic device 301, 1010, 1801 using, among a primary channel C91 and a secondary channel C93, the secondary channel C93 in the frequency range 81.

An operating method of an electronic device 301, 1010, 1801 may include, after a first link 91 is formed between the electronic device 301, 1010, 1801 and an external electronic device 401, 910, 1804 based on a first profile 92 of the external electronic device 401, 910, 1804 broadcasting a Wi-Fi signal, based on a presence of a second link 93 between the electronic device 301, 1010, 1801 and the external electronic device 401, 910, 1804 based on a second profile 94 of the external electronic device 401, 910, 1804, transmitting data to the external electronic device 401, 910, 1804 by using the second profile 94.

The first profile 92 may be configured such that the external electronic device 401, 910, 1804 exchanges data with the electronic device 301, 1010, 1801 using a frequency range 81 of a first bandwidth. The second profile 94 may be configured such that the external electronic device 401, 910, 1804 exchanges data with the electronic device 301, 1010, 1801 using, among a primary channel C91 and a secondary channel C93, the secondary channel C93 in the frequency range 81.

The transmitting may include, while the first link 91 is formed, determining interference on the primary channel C91 of the first link 91 by another client device connected to the external electronic device 401, 910, 1804. The transmitting may include, in response to the determination that the interference exists, transmitting data to the external electronic device 401, 910, 1804 using the second profile 94 based on whether the second link 93 is present.

The transmitting of the data to the external electronic device 401, 910, 1804 using the second profile 94 based on whether the second link 93 is present in response to the determination that the interference exists may include, when the first link 91 and the second link 93 are currently formed, transmitting data to the external electronic device 401, 910, 1804 by using the second link 93 among the first link 91 and the second link 93, based on a setting of a PM bit. The transmitting of the data to the external electronic device 401, 910, 1804 using the second profile 94 based on whether the second link 93 is present in response to the determination that the interference exists may include, when only the first link 91 of the first link 91 and the second link 93 is currently formed, unassociating the first link 91 and generating the second link 93 with the external electronic device 401, 910, 1804 based on the second profile 94.

The transmitting of the data to the external electronic device 401, 910, 1804 by using the second link 93 among the first link 91 and the second link 93, based on the setting of the PM bit when the first link 91 and the second link 93 are currently formed may include, when the first link 91 and the second link 93 are currently formed, respectively adjusting the first link 91 and the second link 93 to a doze state and an awake state through the setting of the PM bit.

The generating of the second link 93 with the external electronic device 401, 910, 1804 based on the second profile 94 may include, when only the first link 91 of the first link 91 and the second link 93 is currently formed, generating the second link 93 based on a BTM request frame 1400 received from the external electronic device 401, 910, 1804. The BTM request frame 1400 may include information on the second profile 94.

An SSID of the first profile 92 may be identical to an SSID of the second profile 94.

A security type of the first profile 92 may be identical to a security type of the second profile 94.

A second bandwidth of each of the primary channel C91 and the secondary channel C93 may be half of the first bandwidth.

The second profile 94 may be configured such that an SP SP2 for the secondary channel C93 between the external electronic device 401, 910, 1804 and the electronic device 301, 1010, 1801 does not temporally overlap with an SP SP1 for transmitting data using the frequency range 81 of the first bandwidth.

A maximum bandwidth supported by the external electronic device 401, 910, 1804 may be wider than a maximum bandwidth supported by the electronic device 301, 1010, 1801.

A non-transitory computer-readable storage medium storing instructions that, when executed by a processor, may cause the processor to perform the above-described operating method.

The electronic device according to an embodiment may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to those described above.

With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 1840) including one or more instructions that are stored in a storage medium (e.g., an internal memory 1836 or an external memory 1838) that is readable by a machine (e.g., the electronic device 1801). For example, a processor (e.g., the processor 1820) of the machine (e.g., the electronic device 1801) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components without the integration. According to embodiments, operations performed by the module, the program, or another component may be carried out sequentially, in parallel, repeatedly, or heuristically, or one or more of the operations may be executed in a different order or omitted, or one or more other operations may be added.

The effects to be achieved are not limited to those described above, and other effects not mentioned above will be clearly understood by one of ordinary skill in the art from this document.

While the disclosure has been illustrated and described with reference to various example embodiments, it will be understood that the various example embodiments are intended to be illustrative, not limiting. It will be further understood by those skilled in the art that various modifications, alternatives and/or variations of the various example embodiments may be made without departing from the true technical spirit and full technical scope of the disclosure, including the appended claims and their equivalents. It will also be understood that any of the embodiment(s) described herein may be used in conjunction with any other embodiment(s) described herein.

## Claims

1. An electronic device (301, 1010, 1801) comprising:
at least one processor including processing circuitry, and
memory storing instructions that, when executed by the at least one processor individually or collectively, cause the electronic device (301, 1010, 1801) to:
after a first link (91) is formed between the electronic device (301, 1010, 1801) and an external electronic device (401, 910, 1802) broadcasting a wireless fidelity, Wi-Fi, signal, and based on a presence of a second link (93) between the electronic device (301, 1010, 1801) and the external electronic device (401, 910, 1802), transmit data to the external electronic device (401, 910, 1802) by using a second profile (94),
wherein the first link (91) is based on a first profile (92) of the external electronic device (401, 910, 1802), and the second link (93) is based on the second profile (94) of the external electronic device (401, 910, 1802), and
wherein the first profile (92) is configured such that the external electronic device (401, 910, 1802) exchanges data with the electronic device (301, 1010, 1801) using a frequency range (81) of a first bandwidth, and
the second profile (94) is configured such that the external electronic device (401, 910, 1802) exchanges data with the electronic device (301, 1010, 1801) using, among a primary channel (C91) and a secondary channel (C93), the secondary channel (C93) in the frequency range (81).

2. The electronic device (301, 1010, 1801) of claim 1, wherein the instructions, when executed by the at least one processor individually or collectively, further cause the electronic device (301, 1010, 1801) to:
while the first link (91) is formed, determine interference on the primary channel (C91) of the first link (91) by another client device connected to the external electronic device (401, 910, 1802), and
in the case where the interference exists, transmit data to the external electronic device (401, 910, 1802) using the second profile (94) based on whether the second link (93) is present.

3. The electronic device (301, 1010, 1801) of one of claims 1 and 2, wherein the instructions, when executed by the at least one processor individually or collectively, further cause the electronic device (301, 1010, 1801) to:
when the first link (91) and the second link (93) are currently formed, transmit data to the external electronic device (401, 910, 1802) using the second link (93) among the first link (91) and the second link (93), based on a setting of a power management, PM, bit of a media access control, MAC, header, and
when only the first link (91) of the first link (91) and the second link 93 is currently formed, unassociate the first link (91) and generate the second link (93) with the external electronic device (401, 910, 1802) based on the second profile (94).

4. The electronic device (301, 1010, 1801) of any one of claims 1 to 3, wherein the instructions, when executed by the at least one processor individually or collectively, further cause the electronic device (301, 1010, 1801) to:
when the first link (91) and the second link (93) are currently formed, adjust the first link (91) to a doze state and adjust the second link (93) to an awake state through the setting of the PM bit.

5. The electronic device (301, 1010, 1801) of any one of claims 1 to 4, wherein the instructions, when executed by the at least one processor individually or collectively, further cause the electronic device (301, 1010, 1801) to:
when only the first link (91) of the first link (91) and the second link (93) is currently formed, generate the second link (93) based on a basic service set transition management, BTM, request frame (1400) received from the external electronic device (401, 910, 1802),
wherein the BTM request frame (1400) comprises information on the second profile (94).

6. The electronic device (301, 1010, 1801) of any one of claims 1 to 5, wherein
a service set identifier, SSID, of the first profile (92) is identical to an SSID of the second profile (94), and
a security type of the first profile (92) is identical to a security type of the second profile (94).

7. The electronic device (301, 1010, 1801) of any one of claims 1 to 6, wherein
each of the primary channel (C91) and the secondary channel (C93) have a second bandwidth (83), wherein the second bandwidth (83) is half of the first bandwidth (81).

8. The electronic device (301, 1010, 1801) of any one of claims 1 to 7 wherein
the second profile (94) is configured such that a service period, SP, (SP2) for the secondary channel (C93) between the external electronic device 401, 910, 1802 and the electronic device 1010 does not temporally overlap with an SP (SP1) for transmitting data using the frequency range (81) of the first bandwidth.

9. The electronic device (301, 1010, 1801) of any one of claims 1 to 8, wherein
a maximum bandwidth supported by the external electronic device (401, 910, 1802) is wider than a maximum bandwidth supported by the electronic device (301, 1010, 1801).

10. An electronic device (401, 910, 1802) broadcasting a Wi-Fi signal, comprising:
at least one processor including processing circuitry, and
memory storing instructions that, when executed by the at least one processor individually or collectively, cause the electronic device (401, 910, 1802) to:
after a first link (91) is formed between the electronic device (401, 910, 1802) and an external electronic device (301, 1010, 1801), and based on a presence of a second link (93) between the electronic device (401, 910, 1802) and the external electronic device (301, 1010, 1801), transmit data to the external electronic device (301, 1010, 1801) by using a second profile (94),
wherein the first link (91) is based on a first profile (92) of the external electronic device (401, 910, 1802), and the second link (93) is based on the second profile (94) of the external electronic device (401, 910, 1802), and
wherein the first profile (92) is configured such that the external electronic device (301, 1010, 1801) exchanges data with the electronic device (401, 910, 1802) using a frequency range (81) of a first bandwidth, and
the second profile (94) is configured such that the electronic device (401, 910, 1802) exchanges data with the external electronic device (301, 1010, 1801) using, among a primary channel (C91) and a secondary channel (C93), the secondary channel (C93) in the frequency range (81).

11. An operating method of an electronic device comprising:
after a first link is formed between the electronic device and an external electronic device broadcasting a Wi-Fi signal, and based on a presence of a second link between the electronic device and the external electronic device, transmitting data to the external electronic device by using a second profile,
wherein the first link is based on a first profile of the external electronic device, and the second link is based on the second profile of the external electronic device, and
wherein the first profile is configured such that the external electronic device exchanges data with the electronic device using a frequency range of a first bandwidth, and
the second profile is configured such that the external electronic device exchanges data with the electronic device using, among a primary channel and a secondary channel, the secondary channel in the frequency range.

12. The operating method of claim 11, wherein the transmitting comprises:
while the first link is formed, determining interference on the primary channel of the fist link by another client device connected to the external electronic device, and
in the case where the interference exists, transmit data to the external electronic device using the second profile based on whether the second link is present.

13. The operating method of one of claims 11 and 12, wherein the transmitting of the data to the external electronic device using the second profile based on whether the second link is present in response to the determination that the interference exists comprises:
when the first link and the second link are currently formed, the transmitting the data to the external electronic device using the second link among the first link and the second link, based on a setting of a PM bit of a MAC header, and
when only the first link of the first link and the second link is currently formed, the operating method further comprises unassociating the first link and generating the second link with the external electronic device based on the second profile.

14. The operating method of any one of claims 11 to 13, further comprising:
when the first link and the second link are currently formed, adjusting the first link to a doze state and adjusting the second link to an awake state through the setting of the PM bit.

15. A non-transitory computer-readable storage medium storing instructions that, when executed by a processor, cause the processor to perform the operating method of any one of claims 11 to 14.
